(19) Europäisches Patentamt / European Patent Office / Office européen des brevets

(11) **EP 3 683 951 A1**

(12) **EUROPEAN PATENT APPLICATION**

(43) Date of publication:
**22.07.2020 Bulletin 2020/30**

(51) Int Cl.:
***H02N 2/18*** *(2006.01)*

(21) Application number: **19195972.5**

(22) Date of filing: **06.09.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.01.2019 US 201962918051 P
14.05.2019 US 201962920736 P**

(71) Applicant: **Enervibe Ltd.
88820 Hevel Eilot Regional Council (IL)**

(72) Inventors:
• **Haronian, Dan
88820 Hevel Eilot Regional Council (IL)**
• **Haronian, Michael
88820 Hevel Eilot Regional Council (IL)**

(74) Representative: **Kretschmann, Dennis
Boehmert & Boehmert
Anwaltspartnerschaft mbB
Pettenkoferstrasse 22
80336 München (DE)**

(54) **MICRO-ELECTROMECHANICAL DEVICE FOR ENERGY HARVESTING**

(57)     The present invention discloses, *inter alia,* a micro-electromechanical device (DEVICE) for sensing and for harvesting electrical energy responsive to being subjected to mechanical forces that includes at least one first electrode fixedly mounted on a first support, wherein the at least one first electrode is chargeable with electrons, and at least one second electrode inertia-mounted on a second support such that the first and second supports are electrically isolated from each other.

FIG. 3A

## Description

### TECHNICAL FIELD

The present disclosure relates to micro-electromechanical systems, devices and methods for harvesting electrical energy from mechanical movements and displacement sensors.

### BACKGROUND

Micro-electromechanical devices and systems utilize piezoelectric, electromagnetic or electrostatic converters for converting mechanical movement into electrical energy.

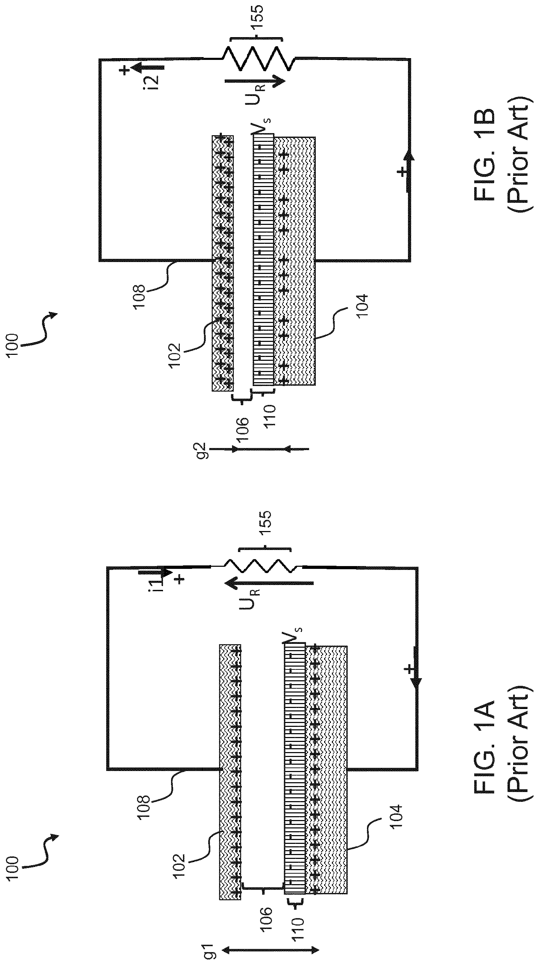

As shown schematically in **FIGS. 1A** and **1B**, a known electrostatic converter **100** has a variable capacitor structure comprising a first and a second capacitor plate **102** and **104** separated by a dielectric **106** (e.g., air) and which are conductively coupled with each other over a conductor **108** having a resistivity or load **155** having an impedance **Z**. An electret layer **110** is formed on, or constitutes either first capacitor plate **102** or second capacitor plate **104** such as to face the other plate. The electret can be made of $SiO_2$ and is charged with electrons, for example, by using corona. Further, first and/or second capacitor plates **102** and **104** are mounted to allow alternatingly retracting and approaching movements which, in turn, induces alternating (AC) electric current in conductor **108**. Relative retracting and approaching movements of first and second capacitors plates **102** and **104** are schematically illustrated by arrows **g1** and **g2**. For example, first capacitor plate **102** may be moveably mounted (e.g., suspended) to allow its displacement responsive to mechanical vibrations in approaching and retracting directions **g1** and **g2** relative to second capacitor plate **104** which may be fixed in space. Another possibility is a device configuration in which the gap between the electrodes remains substantially constant, yet which oscillate sideways so that the amount of electrodes overlap changes periodically. The induced AC may be rectified by rectifier circuitry to generate a direct current (DC), e.g., for charging batteries or powering an electrical device.

If a distance between first and second plates **102** and **104** due to relative displacement in direction **G1** is large enough, the charge on the capacitors is redistributed and the electric current flows as schematically illustrated in **FIG. 1A** by arrow **i1**. Conversely, if a distance between first and second plates **102** and **104** decreases due to relative approaching displacement in direction **D2**, then the electric current flows as schematically illustrated in **FIG. 1B** by arrow **i2**.

Electrostatic converters that employ electrets are disclosed exemplarily by T. Tsutsumino, Y. Suzuki, N. Kasagi, K. Kashiwagi, Y. Morizawa in "Efficiency Evaluation of Micro Seismic Electret Power Generator", Proceedings of the 23rd Sensor Symposium 2006, Takamatsu, pp. 521-524; by Ma Wei, Zhu Ruiqing, Rufer Libor, Zohar Yitshak, Wong Man in "An integrated floating-electrode electric microgenerator", Journal of microelectromechanical systems, v. 16, (1), 2007, FEB, p. 29-37; and in United States Patent 8796902 to TATSUAKIRA et al. titled "Electrostatic Induction Power Generator". The lifetime of a known electrostatic converter such as converter **100** depends, *inter alia,* on the charge stability implanted inside the electret.

US publication 20170373611A (Cottone), US publication 6597048 (Ken) and JP2008200758 publication (Sato) disclose a miniature kinetic energy harvester, an electrostatically charged microstructure and MEMS element, and none of them include a mechanoelectric transducer that is deigned to adjust its mechanoelectrical property to a desired level.

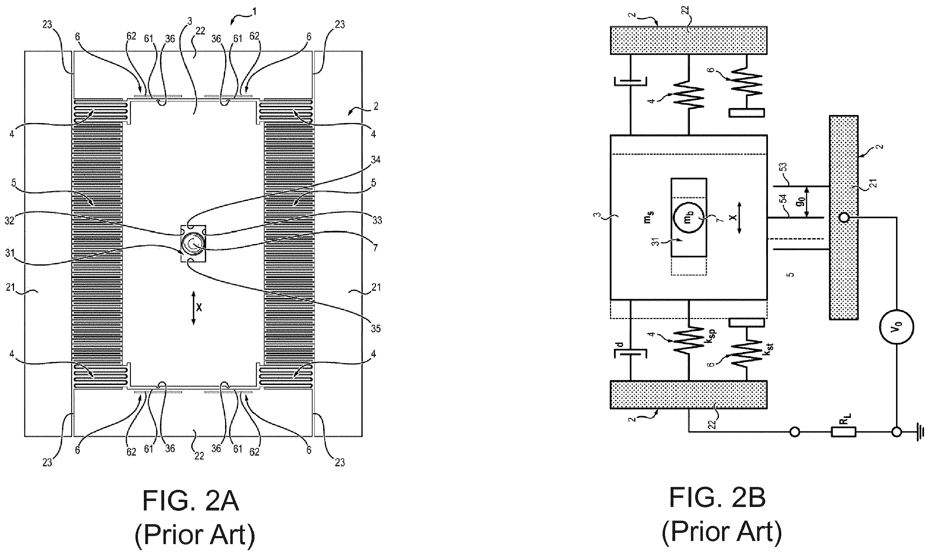

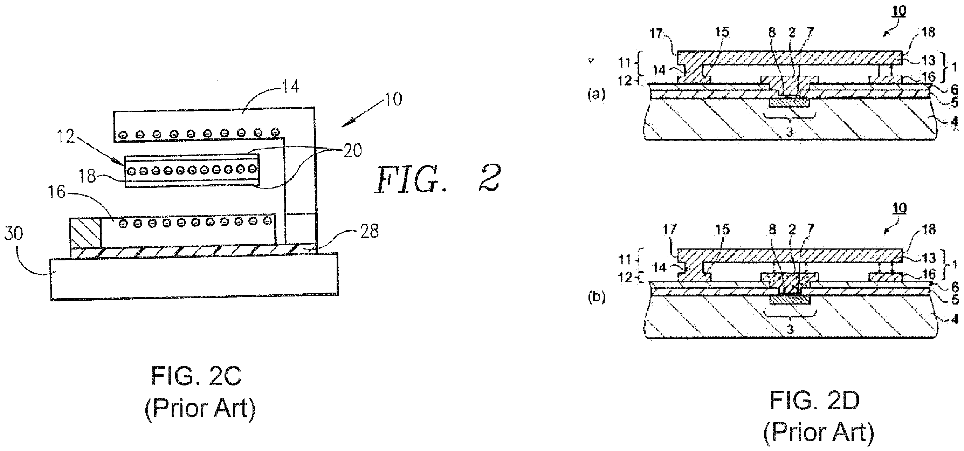

Cottone et. al. in patent application US20170373611A discuss an electrostatic energy harvester for generating electrical energy from mechanical vibrations. **FIG. 2A** (**FIG. 1** in Cottone) shows a general description of Cottone invention. The invention relates to a miniature kinetic energy harvester **1** for generating electrical energy, comprising: a support **2**, a first element **3** having walls **32-35** surrounding at least one cavity **31**, at least one spring (**4**) mounted between the first element **3** and the support **2**, the spring **4** being arranged so that the first element **3** may be brought into oscillation relative to the support **2** according to at least one direction (**X**) of oscillation, a transducer **5** arranged between the first element **3** and the support **2** for converting oscillation of the first element **3** relative to the support **2** into an electrical signal, at least one second element **7** housed within the cavity **31** and mounted to freely move within the cavity **31** relative to the first element **3** so as to impact the walls **32-35** of the cavity **31** when the harvester **1** is subjected to vibrations.

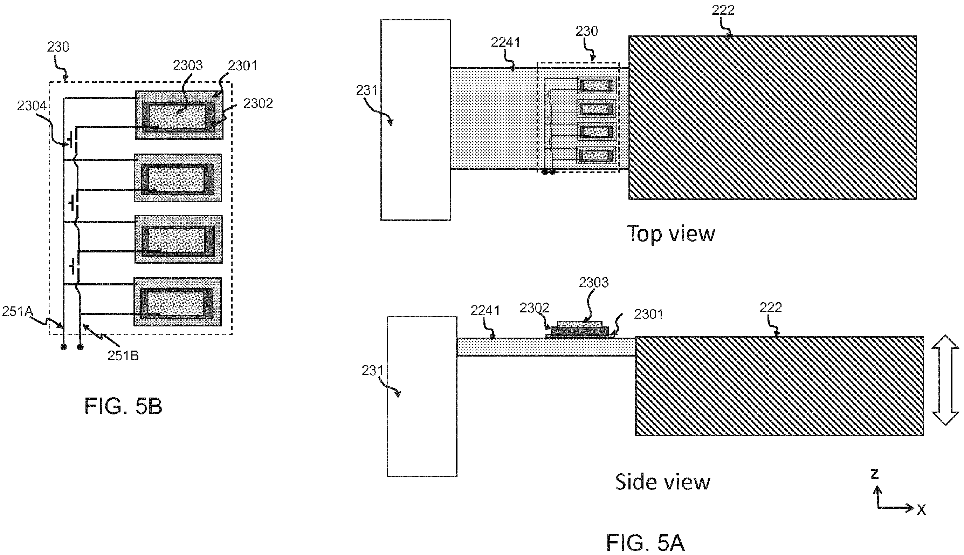

In **FIG. 2B**, Cottone (**FIG. 5** in Cottone) shows a voltage source Vo for precharging the device. The voltage is connected between the first element **3** and the transducer **5** and therefore first element and the transducer are electrically connected to each other.

It is noted that in Cottone element **7** is a free to move inside a cavity within first element **3** such that at low vibration frequencies it hits element **3** and thus induces movement of element **3** relative to transducer **5** that generates of electrical power on the load RL as shown in **FIG. 2B**.

Ken in patent application US6597048B1 discusses Electrostatically charged microstructures. **FIG. 2C** shows a general description of Ken's invention. This invention is about a process and apparatus for injecting electrostatic charges into opposing elements of MEMS structures to produce repulsing forces between the elements. These forces tend to produce controlled spacing between components to prevent sticking and to provide friction-free relative movement.

Sato in JP2008200758-A refers to a MEMS element, A general view of this invention is shown in **FIG. 2D**. Here A capacitor is formed between movable electrode **13** and a fixed electrode **16**. Movable electrode **13** has fixed side **17** end with movable side **18**. A floating gate **2** is placed along electrode **13** and at close proximity such that when the floating gate is charged the charges induces a force on a movable side of the electrode **18** and thus change the gap between the movable side **18** of the electrode and electrode **16** thus change its capacitance. In the prior art described in this invention, whenever related to energy harvesting, do not related the transducer properties to the mechanical excitation.

The description above is presented as a general overview of related art in this field and should not be construed as an admission that any of the information it contains constitutes prior art against the present patent application.

## SUMMARY

The present invention refers to a device for converting mechanical energy to electrical energy, comprising a mechanical device comprising a seismic mass flexibly connected to a base by a spring, and a mechanoelectric transducer that is associated with the mechanical device for converting the mechanical energy to the electric energy, such that the mechanoelectric transducer is deigned to adjust its mechanoelectrical property to a desired level. The transducer terminals are connected to an electric circuit, such that when the seismic mass moves relative to the base an electric current is generated in the electric circuit.

The device for converting mechanical energy to electrical energy as stated above can be relised using different transducers. For example it can be realised by an electrostatic transducer that comprises a capacitive structure made of first and second electrode at close proximity. The first electrode is mounted on the seismic mass and a second electric electrode is mounted on a support. The capacitor is charged by a charging device to a level that allows optimal energy conversion. Details of such optimal conversion is given below. The charging device is connected to the first electrode through an electric disconnecting mechanism such that the charging device is electrically connected to the electrode only while charging in order to avoid charge leakage.

Another example for implementing an adjustable transducer is to use a piezoelectric transducer that is fixed to a bending spring with seismic mass fixed to its free end. The piezoelectric transducer is comprised of plurality of piezoelectric transducers units that may be connected or disconnected such that the overall piezoelectric constant of the piezoelectric transducer may be modified in order to optimize the mechanical to electrical power conversion.

A third example for an adjustable transducer may use a magnet that is fixed to the seismic mass and an inductor that is made of conductive coil, placed at close proximity to the magnet. The two ends of the coil may be connected to a load such that when the seismic mass and the magent move relative to the coil current is induced in the coil. The length of the wire in the coil is adjustable, for example by having one of the wires ends comprised of a slider that slides along the coil. By changing the length of the coil the mechanoelectric coupling between the mass movement and the electric power in the inductor may be tuned to an optimal value.

The device for converting mechanical energy to electrical energy as stated above, may further includes a power management circuit for converting the electric current to DC power so that the device can be used for energy harvesting. In addition, the device may further include a secondary electric circuit for adjusting the desired level of mechanoelectrical property such that the electric current can be adjusted. This device may further include a power management circuit that transform the electric current to a DC power source for powering the secondary electric circuit.

The device for converting mechanical energy to electrical energy as stated above, may also use the value of the electric current to represent the movement of the device. The device may also be used as inertial sensor.

## BRIEF DESCRIPTION OF THE FIGURES

The figures illustrate generally, by way of example but not by way of limitation, various embodiments discussed in the present disclosure.

For simplicity and clarity of illustration, elements shown in the figures have not necessarily been drawn to scale. For example, the dimensions of some of the elements may be exaggerated relative to other elements. Furthermore, reference numerals may be repeated among the figures to indicate corresponding or analogous elements. The figures are listed below.

**FIG. 1A** is a schematic circuit diagram illustration of a DEVICE showing using transducer based on charged electret, as known in the art;

**FIG. 1B** is a schematic circuit diagram illustration of the DEVICE showing approaching electrode, as known in the art;

**FIG. 2A** Fig.1 from Prior art by Cottone;

**FIG. 2B** Fig.5 from Prior art by Cottone;

**FIG. 2C** Fig.2 from Prior art by Kan;

**FIG. 2D** From prior art by Sato;

**FIG. 3A** General schematic of a DEVICE with adjustable transducer;

**FIG. 3B** is a schematic perspective view of a seismic mass supported by springs;

**FIG. 4** is a schematic view of a DEVICE comprising an electromagnetic transducer with adjustable inductor;

**FIG. 5** is a schematic view of a DEVICE comparing a piezoelectric transducer made of an array of piezoelectric units that can be connected or disconnected;

**FIG. 6A** is a schematic perspective view of a DEVICE, according to another embodiment;

**FIG. 6B** is a schematic top plan view illustration of the DEVICE of **FIG. 6A**;

**FIG. 6C** is a schematic top plan view illustration of a DEVICE, according to an alternative embodiment;

**FIG. 6D** is a schematic perspective view of a DEVICE, according to a yet other embodiment;

**FIG. 7A** is a schematic perspective side view illustration of a FGCD charging arrangement, according to an embodiment;

**FIG. 7B** is a schematic perspective front view illustration of a FGCD charging arrangement, according to another embodiment;

**FIG. 7C** is a schematic top plan view illustration of the FGCD shown in **FIG. 7B**;

**FIG. 8A** is a schematic side view illustration of a FGCD and the electron tunneling path, according to an embodiment;

**FIG. 8B** is a schematic side view illustration of a charging arrangement showing a first charge distribution stage;

**FIG. 8C** is a schematic side view illustration of a charging arrangement showing a later, second charge distribution stage;

**FIG. 9A** is a schematic top plan view illustration of a FGCD arrangement, according a yet other embodiment;

**FIG. 9B** is a schematic top plan view illustration of a FGCD charging arrangement, shown one floating gate charging device charging a plurality of first charged element according to another embodiment;

**FIG. 10A** is a schematic top plan view illustration of a DEVICE shown in FIG. 6B, where first electrode is charged using FGCD;

**FIG. 10B** is a schematic top plan view illustration of a DEVICE shown in FIG. 6B, where first electrode is charged using voltage source and is isolated using switch;

**FIG. 10C** is a schematic top plan view illustration of a DEVICE shown in FIG. 6B, where first electrode is charged using voltage source and is isolated using fuse;

**FIG. 10D** is a schematic top plan view illustration of a DEVICE shown in FIG. 6D where first electrode is charged using FGCD;

**FIG. 10E** is a schematic top plan view illustration of a DEVICE shown in FIG. 6D where first electrode is charged using voltage source and is isolated using switch;

**FIG. 10F** is a schematic top plan view illustration of a DEVICE shown in FIG. 6D where first electrode is charged using voltage source and is isolated using fuse;

**FIG. 11** is a block diagram illustration of a DEVICE with a controller for controlling transducer MEC properties, according to an embodiment;

**FIG. 12A-12G** describes different stages in a method for manufacturing a charging arrangement, according to an embodiment;

**FIG. 13** describes another example of a fabrication process of a DEVICE, according to an embodiment.

## DETAILED DESCRIPTION

The following description of a device for converting mechanical energy to electrical energy (DEVICE), systems and methods for energy harvesting and/or sensing is given with reference to particular examples, with the understanding that such devices, systems and methods are not limited to these examples.

The expression "energy harvesting" as used herein, as well as grammatical variations thereof, refers to the conversion of mechanical motion into electric energy. Such mechanical motion may the result of acceleration and/or vibration on a DEVICE according to embodiments.

Accordingly, a DEVICE according to an embodiment may function as a displacement sensor or inertial sensor. Vibrations may be periodic or random or result from forces such as Coriolis force in DEVICE used as a gyroscope. In some embodiments, a DEVICE may be employed for energy harvesting. Sensed mechanical motion may be desirable or undesirable ("wasting energy"). Sources of undesirable vibration include, for example, vibrational motions of engines, friction, movement of a tire on a road, walking, mammalian organ and vascular movement, etc.

A DEVICE includes according to some embodiments a seismic mass suspended over a spring, a transducer that converts mechanical energy into electrical energy and a circuit that uses the electrical energy converted by the transducer. The energy may be used for many applications including energy harvesting, vibration sensing, or inertial sensing including acceleration and velocity through some gyroscope architecture.

Typically, the transducer of an energy harvesting or for sensing is based on piezoelectric effect, electrostatic or electromagnetic induction. The efficiency of the power conversion is a function of several parameters, including the weight of seismic mass, the vibration applied, the resonance frequencies of the spring mass system, the parasitic damping, and the magnitude of the mechano-electric coupling (MEC). The MEC has the same effect as the damping by friction and may be referred to as "electric damping," where mechanical energy is converted into electricity instead of to heat. For example, in piezoelectric transducer, the electric damping is $k_e^2$ which is the electromechanical coupling coefficient, in elect traducer the MEC is related to the charge density on the electrode, and in electromagnetic transducer it is related to the magnetic inductance that is comprised of the magnetic strength and the inductor geometry.

The electric power that is converted into electricity is described analytically in the equation (1):

$$P_e = \frac{1}{2}D\dot{X}^2 = \xi_e m \omega_n \dot{X}^2$$

$$(1) \qquad P_e = \frac{\xi_e r^2 m \omega^3 Y_0{}^2}{(1-r^2)^2 + \left[2(\xi_e + \xi_p)\right]^2}$$

Where

$$r = \frac{\omega}{\omega_n}, \xi_e = \frac{D_e}{2m\omega_n}, \xi_p = \frac{D_p}{2m\omega_n}, \ Q = \frac{1}{2(\xi_e + \xi_p)}$$

$\xi_p$ is the mechanical damping., $\xi_e$ is the MEC (electrical damping) $\square$ is the vibration frequency, and $\square_n$ is the mass-spring resonance frequency.

It is evident from equation (1) that the harvested power is zero when MEC is zero or at infinity. Therefore, it is may be understood that there is a preferred value between MEC=o and MEC=infinity where the power is at maximum. This optimal value of MEC is different for different vibration frequency and for different mechanical damping. In addition, not indicated in the equations above, for a given MEC the vibration amplitude of the seismic mass-spring system may become high to the point where the seismic mass hits a stopper. Such a stopper is found in most Vibration Energy Harvesters or sensors such as accelerometers and are designed to prevent the seismic mass vibration amplitude to exceed a level that may damage the device. By adjusting the MEC it is possible to control the amplitude of movement of the seismic mass such that the converted power is optimized while minimizing the mechanical damage.

The MEC of state-of-the-art Energy harvesters or sensors transducer is fixed. In piezoelectric this is a piezoelectric constant which is a result of the piezoelectric material and of the dimensions that is deposited on the flexing part of the DEVICE. In electrostatic based DEVICE, this is the charge density that is created on the electret, typically using corona. In electromagnetic based DEVICE, it is the induction constant that results from the magnetic strength and the inductor.

This invention is related to DEVICE where the MEC of the transducer can be adjusted such that power generated is optimized or such that the vibration amplitude of the seismic mass is controlled.

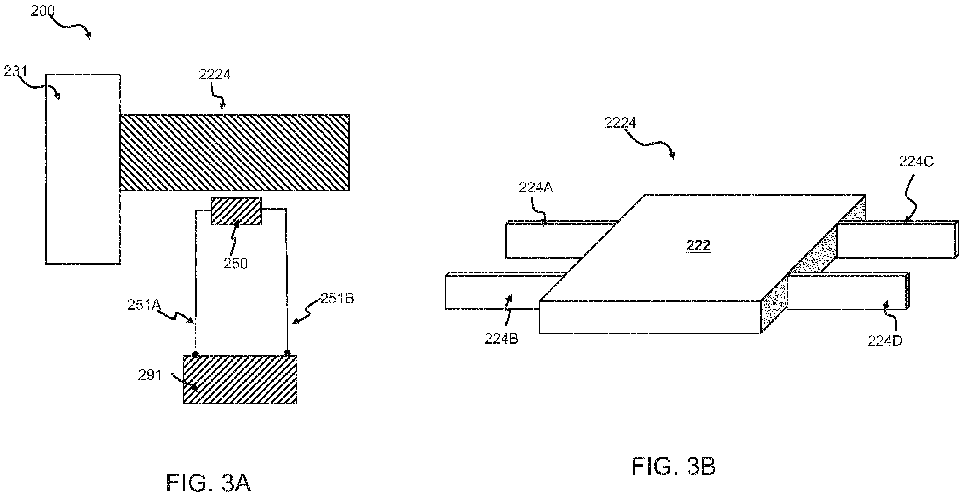

A general description of a DEVICE is shown in **FIGs. 3A** and **3B**. The DEVICE **200** comprises a mass-spring system **2224** such that the spring is anchored to a support **231**. An adjustable transducer **250** is coupled to the spring-mass system and its output terminals **251A**, **251B** are connected to an electric circuit **291**. The Adjustable transducer **250** is associated with the mass movement directly or secondary effect such as strain generated in the spring as a result of the mass movement. Spring in **FIG. 3A** may a single spring or plurality of springs as shown in **FIG. 3B** where the spring is comprised of 4 springs **224A-224C**.

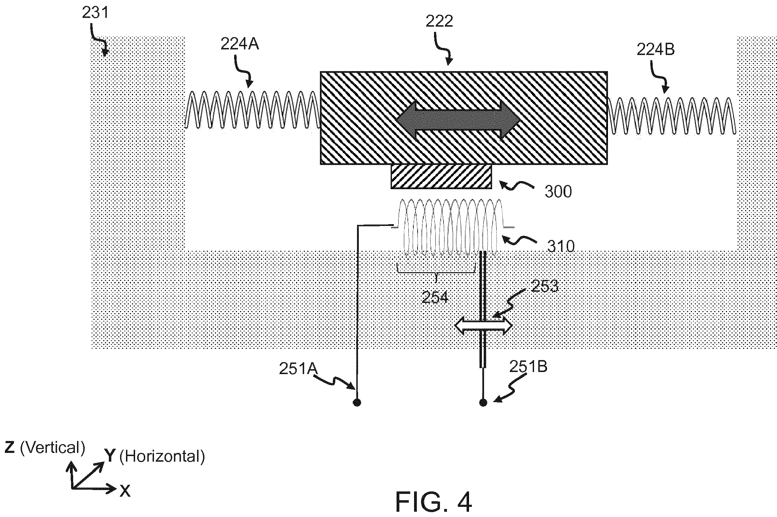

One example of such a DEVICE with adjustable transducer is shown in FIG. 4. This DEVICE uses electromagnetic transducer such that the length of the inductor may be changed in order to control the overall induction. A seismic mass **222,** is connected to a support **231** through springs **224A** and **224B**, that are free to move in the X direction. Magnet **300** is fixed to the seismic mass and an inductor **310** is placed at close proximity to the magnet such that the movement of the magnet induces current in the inductor. The inductor terminals **251A** and **251B** are connected to an electric circuit such that terminal **251B** is connected to a metal bar that can slide along the inductor coils such that the total number of coils may be selected such that the MEC may be adjusted.

Another example of a DEVICE with adjustable transducer is shown in **FIG. 5A** where a seismic mass **222** is connected to a support **231** through a bending spring **224**. A piezoelectric transducer **230**, comprised of array of piezoelectric units that are deposited along the bending spring preferably in location where the strain is the highest. **FIG. 4B** shows possible arrangement of the piezoelectric array with two terminals **251A** and **251B** that are connected to an external circuit (not shown). Each unit in the array is comprised of bottom electrode **2301**, piezoelectric material **2302**, and upper electrode **2303**. Switches **2304** may connect and disconnect piezoelectric units such that the overall MEC of the piezoelectric transducer **230** may be controlled.

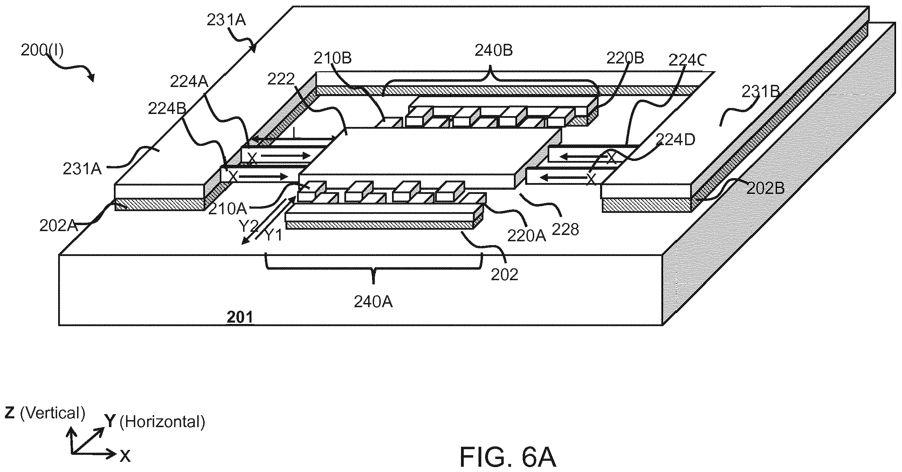

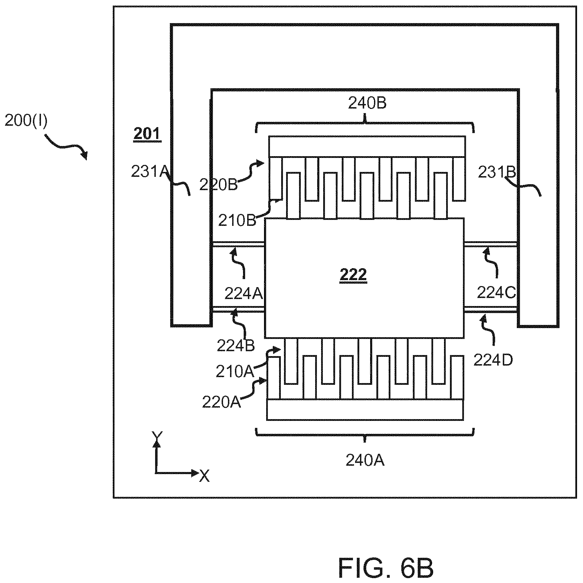

Another example of a DEVICE with adjustable transducer is shown in **FIGs. 6A-6C**. Reference is made to **FIG. 6A**, which schematically illustrates a perspective of a DEVICE **200(I)**; and to **FIG. 6B**, which schematically illustrates a top planar view of DEVICE **200(I)**, according to the embodiment of **FIG. 6A**.

To simplify the discussion that follows, DEVICEs **200(I)** - **200(III)** are herein collectively referred to as DEVICE **200**, unless the description refers to the operable differences resulting from the different coupling configurations of the electrode.

As shown schematically in **FIGS. 6A** and **6B**, in an embodiment, with respective reference to a first side **240A** and a second side **240B** of DEVICE **200**, first fixedly mounted electrodes **220A** and **220B** and oscillating electrodes **210A** and **210B** may be arranged in a laterally interlacing manner to form a comb-like structure, such that upon seismic mass movement in the Y direction the overlapping area of electrodes **210A** and **220A** and electrodes **210B** and **220B** changes.

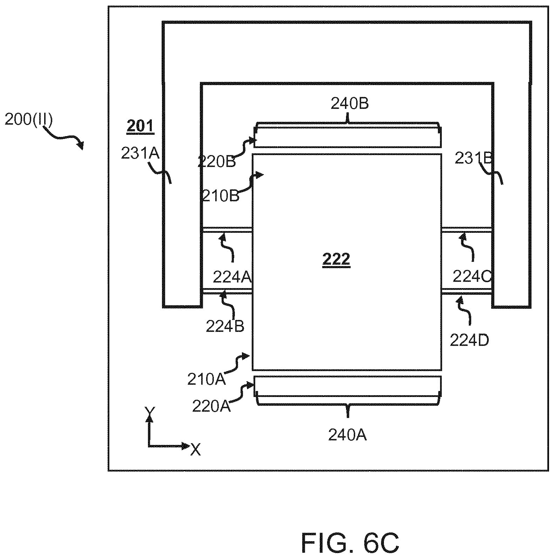

FIG. **6C** shows schematically another embodiment where electrode **210A** is facing electrode **220A**, and electrode **210B** is facing electrode **220B** such that the when seismic mass **222** moves in the Y direction the gap between electrode **210A** and **220A**, and electrode **210B** and **220B** changes.

It should be noted that the number of first and second electrodes **210** and **220** shown in the accompanying figures is for exemplary purposes only and should by no means to be construed as limiting.

First electrodes **210** can be electrically charged, e.g., in a controlled manner. Second electrodes **220** are fixed and connected to an electrical circuit (not shown). To simplify the discussion that follows, without being construed limiting, the following description refers to a configuration in which the first electrodes are charged using a charging device, for example a FGCD, or a voltage source with isolating mean such as switch or fuse. Accordingly, in some embodiments, the charged electrodes may be fixedly mounted, while charge is induced in the circuit through the other, suspended electrodes. The term "selectively chargeable" refers to controlled and selective electric charging to a required level using a charging device.

First electrode **210** may be suspended in an isolated manner on a carrier wafer layer **201** to operably cooperate with second electrodes **220**. The expressions "operably cooperate" or "operably mounted" as used herein with respect to "electrodes", as well as grammatical variations thereof, may refer to an arrangement in which the oscillating movement of one electrode relative to a second electrode, can induce electric current in an electrical circuit which is connected to the second electrode, when the first electrode is charged.

In an embodiment, the first and second electrodes may, for example, be manufactured using a Silicon-on-Insulator (SOI) wafer (e.g., a silicon carry wafer coated by layer of oxide and on top of it bonded silicon layer), or a Silicon on Glass (SOG) wafer, or using Spin On Glass technology for creating electrically isolated supports on a carry wafer.

The expression "electrically isolated" with respect to the "first electrodes" as used herein may refer to a state in which the first electrodes, under normal operating conditions, are electrically isolated from the wafer substrate, e.g., through an oxide layer unless the substrate is made of insulating material such as glass, and from the second electrodes by space. The space between the first and second electrodes may be in the range of several micrometers.

In an embodiment, first and second electrode may be made of a Single Crystal Silicon (SCS) on insulator carry wafer. Insulator carry wafer may for example be made of oxide on silicon wafer, glass wafer, Spin-On-Glass, and/or any other suitable material.

Charge may also leak from first electrode to the second electrode by avalanche backdown through the space between the electrodes and according to Paschen's law, or due to field emission. Lowering the pressure of the space between the first and second conductive electrodes will increase the backdown voltage that leads to such a leak and thus lower the risk of charge leakage. In all embodiments in this invention it is assumed that the DEVICE may be packaged in low pressure, preferably as part of wafer level packaging.

It is noted that an electrode may be considered to be electrically isolated even when it can be charged using a FGCD using a proper tunneling setup, or by voltage source that may be electrically disconnected from the electrode for example by a switch or by a fuse.

In an embodiment, first and second electrodes **210** and **220** may lie in the same plane. Second electrodes **220** may be rigidly mounted onto electrically isolating island layers **202** (e.g., oxide layers) in a cantilevered manner so that a portion of each one of second electrodes **220** is extending from a proximal coupling area of the respective isolating island layers **202**. The extension part may be suspended in air in order to reduce the overall supporting oxide. The same is true for the support **231** of first electrode **210,** in general, as shown in **FIG. 6A**. Such a reduction in the supporting oxide area reduces the capacitance to the substrate and reduces the area through which charge may leak (through the oxide) to the substrate. Isolating island layers **202** overlay carrying wafer layer **201** that may be made of insulating material such as glass.

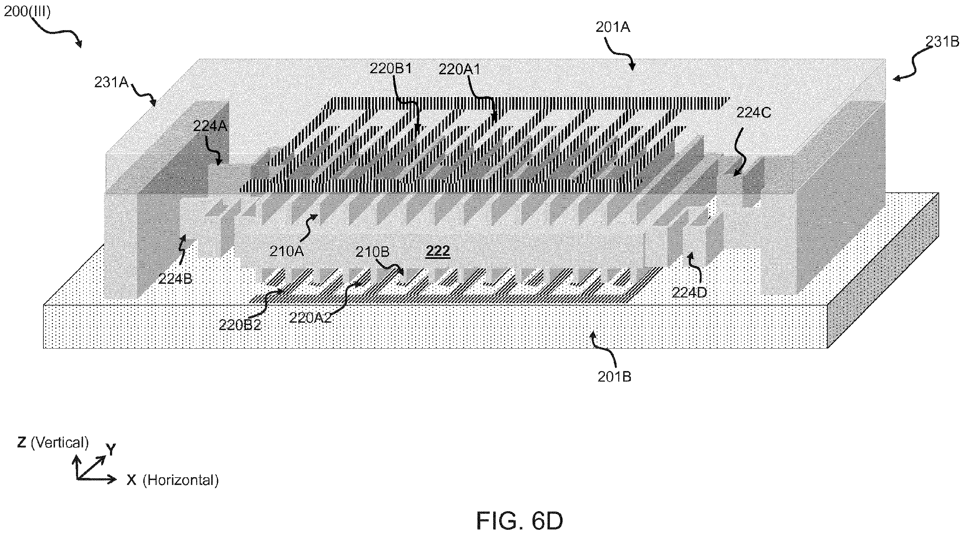

Reference is made to **FIG. 6D** which schematically illustrate DEVICE **200(III)** showing another embodiment.

An inertia element **222** that includes the first electrodes **210A** and **210B**, may oscillate along the X direction, coupled with a support **231A** and **231B**. Inertia element **222** and elements **210** are preferably made of conductive material and together have a center of gravity G. For example, first electrodes **210A** may extend from an inertia element **222** so that a portion of each one of first electrodes **220** extends from the top and from the bottom planes of inertia element **222**, towards the upper and lower layers **201A**, **201B**. Second electrode is shown made of two sets of electrodes such that one set, **220A1** and **220B1**, is fabricated on the upper layer, **201A**, and a second set, **220A1** and **220B1**, is fabricated on the lower layer, **201B**. Support **231** maybe physically fixed to bottom layer **201B**, or it can be supported by upper layer or upper and lower layers, as shown in **FIG. 6D**. Bottom and upper layers, **201A** and **201B** may preferably be made of insulating material for example glass.

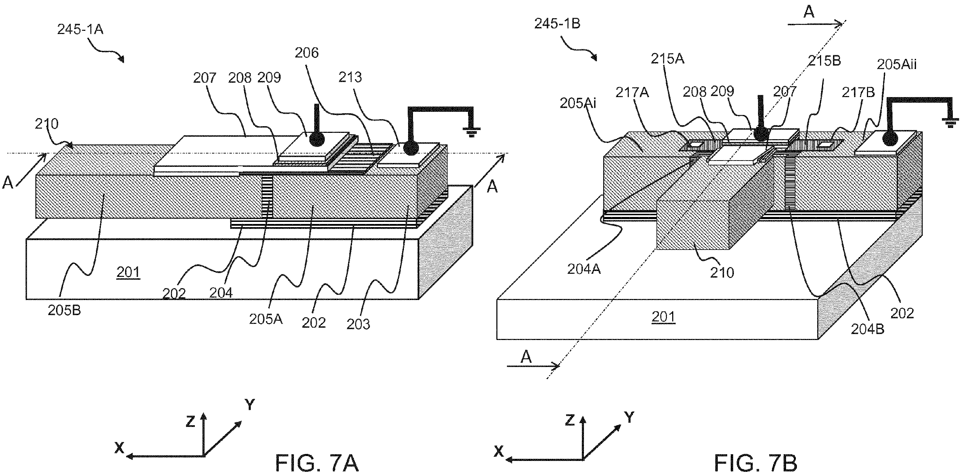

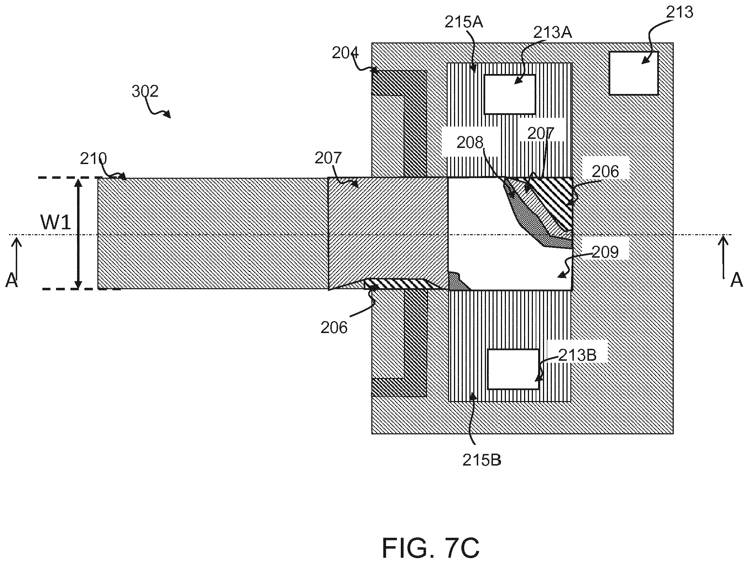

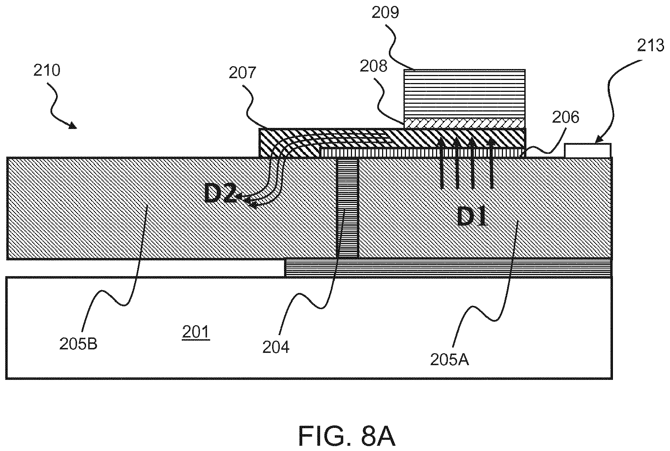

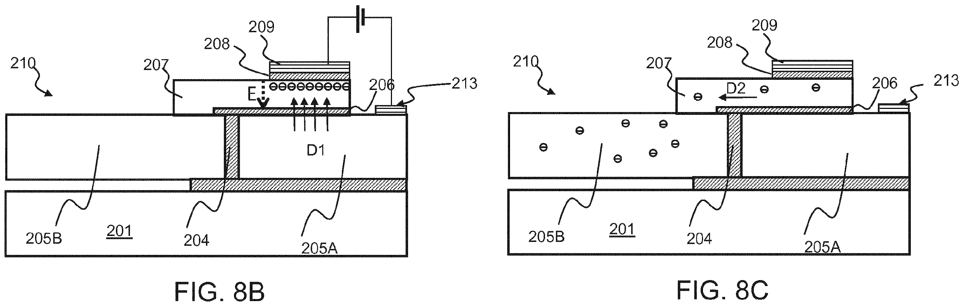

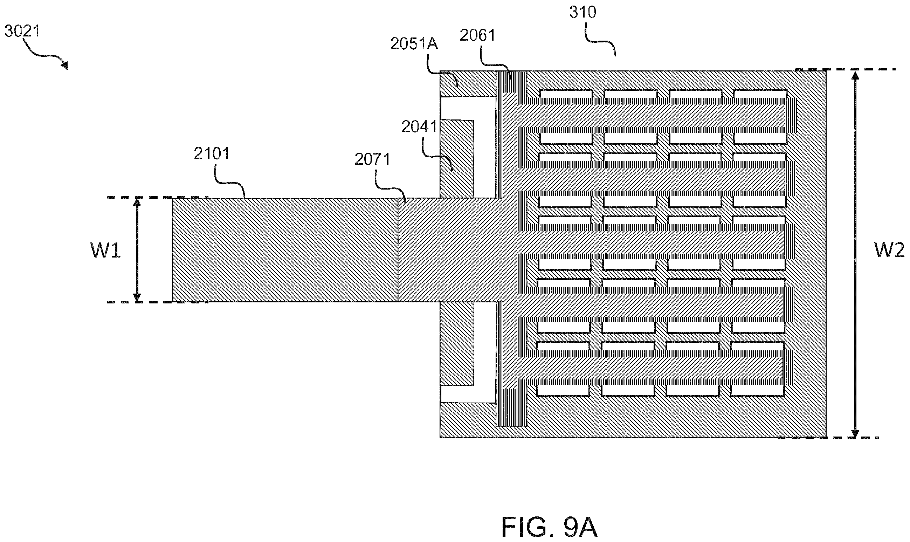

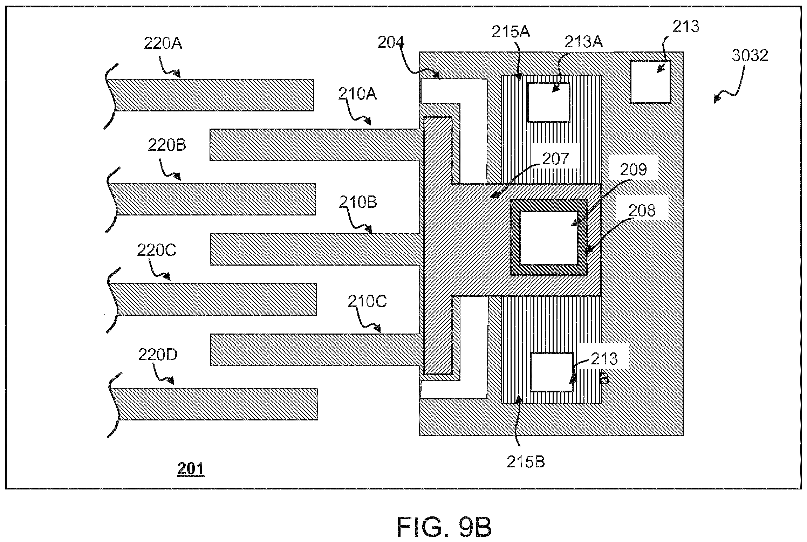

Reference is now made to **FIG. 7A**, which shows a schematic perspective side-view illustration of a first configuration of the FGCD **245-1A** according to some embodiments; to **FIG. 7B**, which shows a schematic perspective front-view illustration of a second configuration of the FGCD **245-1B**, according to some alternative embodiments; and to **FIG. 7C** which shows a schematic top plan view illustration of a charging arrangement **245-1B**. Moreover, reference is also made to **FIGs. 8A, FIG. 8B** and **FIG. 8C** which shows the cross section A-A indicated in **FIGs. 7A-7C**, according to some embodiments; and to **FIGs. 9A** and **9B** which shows a schematic plan top view illustration of yet another FGCD charging arrangement, according to an alternative embodiment.

Referring to **FIG. 7A**, charging arrangement **245-iA** may comprise an island layer **202** on carrying wafer layer **201** and a conductive layer **203** partly connected to carrying wafer layer **201** through isolated layer **202** and partly suspended. Conductive layer **203** may be divided into a proximal conductive portion **205A** and a distal conductive portion **205B** by an isolating barrier **204** which extends perpendicularly from island layer **202** up to the upper surface of conductive layer **203**. The distal conductive portion **205B** may constitute electrode **210** (e.g., a silicon - electrode element), which may herein also be referred to as electrode **210**. Some (e.g., the majority) but not all of distal conductive portion **205B** may be suspended or cantilevered over the part of carrying wafer layer **201** which is not covered with isolating layer **202**. The upper surface of isolating barrier **204** may be in substantially the same plane as the upper surfaces of proximal and distal conductive portions **205A** and **205B**.

A tunneling oxide layer **206** may overlay a part of proximal conductive portions **205A**, extending entirely over the upper surface of isolating barrier **204** and further over a part of distal portion **205B** such that some of the distal conductive portion **205B** remains exposed. In an embodiment, the oxide beyond isolating barrier **204** (i.e. in a distal direction away from the FGCD structure) may be thicker than the tunnel oxide as no tunneling current flows beyond this point. Such a "thick" oxide may be required to improve isolation and reduce parasitic capacitance. Furthermore, a floating gate layer **207** may overlay tunnel oxide layer **206** and "spill over" the distal edge of tunnel oxide **206** to cover an additional area of the upper surface of distal conductive portion **205B**, sufficiently to create a good electrical contact that will allow electrons to flow without much resistance.

On top of floating gate **207**, a gate isolating layer **208** and a charging gate layer **209** are disposed. A reference pad **213** may be disposed over the proximal edge of the floating gate arrangement of tunnel layer **206** so that a voltage can be built up between distal gate layer **209** and reference pad **213**, allowing the tunneling condition and electrons flow for charging the floating gate **207**. It is noted that in this way the first electrode(s) can be considered to be charged "directly", since the floating gate of the FGCD is directly coupled to and integrally formed with the first electrode.

Floating gate layer **207** can for example be made of conductive material such that electrons tunneling into the floating gate will flow along it to conductive portion **205B**.

As shown schematically in **FIG. 7B**, a charging arrangement **245-1B** may include a Source **215A** and Drain **215B** with electrical pads **217A** and **217B** respectively. In some embodiments, source **215A** and the drain **215B** are doped silicon with doping type that is opposite to the substrate type. That is if the substrate is P type, the S and the D are N+ type. The "+" signs indicates that the material is highly doped. Numerals **205Ai** and **205Aii** indicate the left and right portions of the T-shaped FGCD arrangement. Numerals **204A** and **204B** indicate the right/left barrier portions of the floating gate arrangement. The shading in the Figures defining the Source and the Drain are for illustrative purpose only. As in the configuration shown in **FIG. 7A**, charging Gate **209** creates a tunneling path that allows electrons to flow from the substrate to the floating gate. By applying a voltage between the source and the drain, electrons flow along a conductive channel under the tunnel oxide. Some of these electrons, called "hot" electrons because of their kinetic energy, change their direction and tunnel to the floating gate such that the charging effect is enhanced compared to a process where the charging is done only by applying a gate voltage.

As shown schematically in **FIG. 7C**, a suspended electrode **210** may have a width **W1** ranging, for example, from about 1 $\mu$m to about 2 $\mu$m, or of the order of several microns. Additional reference is made to **FIG. 8A**, which schematically illustrates the electron propagation path responsive to the application of a tunneling condition as a result of gate voltage. This description is also valid in case of hot electrons, in case of Source and Drain arrangement, and voltage is also applied between the source and the drain.

When a tunneling voltage is applied between gate **209** and the reference pad **213** and between the source and the drain (in case of a configuration that includes source and drain), electrons tunneled from proximal conductive portion **205A** via tunneling oxide layer **206** charging floating gate layer **207** (schematically illustrated by arrow **D1**), and, further by diffusion, to distal conductive portion **205B** of electrode **210** (as schematically illustrated by arrow **D2**).

Reference is made to **FIGS. 8B** and **8C**. Since the field between the charging gate and the substrate is limited to their overlapping area, the electrons may concentrate there as shown schematically in **FIG. 8B**. When the voltage is dropped to zero and the field vanishes, the electrons may diffuse to the floating gate extension and to electrode **210** as shown in **FIG. 8C**. When electrode 205B is at close proximity to a second electrode a capacitor is formed, and the charge may concentrate on the capacitor planes. In this case, the charging arrangement works as a charge pump, where each charging cycle pumps more electrons to charge electrode **210**. The charge pulses may be very short so that the steps shown in **FIGS. 8B** and **8C** may take less than a second.

Charge may be pumped (drained) out of the element by reversing the polarity of the charging gate voltage and by using a similar cycling method.

Further reference is now made to **FIG. 9A**, which illustrates schematically a charging arrangement **3021** comprising a plurality of FGCD, **310**, respective "sources" and "drains" of a floating gate extension and layer **2071** that are arranged and operable to enable the selective charging of a electrode **2101**, through floating gate **2071** that extends to contact element **2101** according to some embodiments. In other words, a plurality of floating gates may be employed for charging a electrode. As shown schematically in **FIG. 9A**, there is practically no limitation on the width **W2** of floating gate extension layer **2071**. Width **W2** can for example range from 0.5 $\mu$m to 100 $\mu$m or more. A barrier **2041** isolates a proximal conductive portion **2051A** from electrode **2101**.

Further reference is now made to **FIG. 9B**, which illustrates schematically a charging arrangement **3032** comprising a plurality of first electrodes **210A-210C** that are charged by one FGCD that includes a source and a drain.

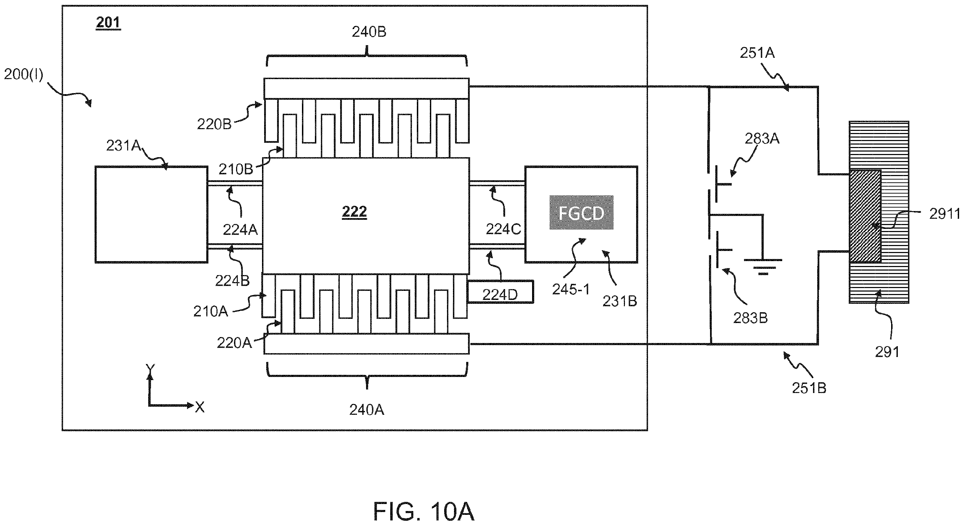

Additional reference is made to **FIGs. 10A-10C**. **FIG. 10A**, schematically illustrates a DEVICE **200(I)** shown in **FIGS. 6A** and **6B** such that first electrode is connected to the floating gate of a FGCD, **245-1-1** such that charge in the floating gate, once charged, charges the capacitor formed between electrode **210** and **220**. FGCD, **245-1-1** refers in general to FGCD, **245-1A** or **245-1B** shown in **FIGs 7A** and **7B**. It is noted that several FGCD may be used in parallel to charge up the first electrode. During charging cycle switches **283A** and **283B** are turned ON such that electrodes **220A** and **220B** are connected to the ground. During working mode switches **283A** and **283B** are turned OFF such that current generated in **220A** and **220B** flow into electric circuit **291**.

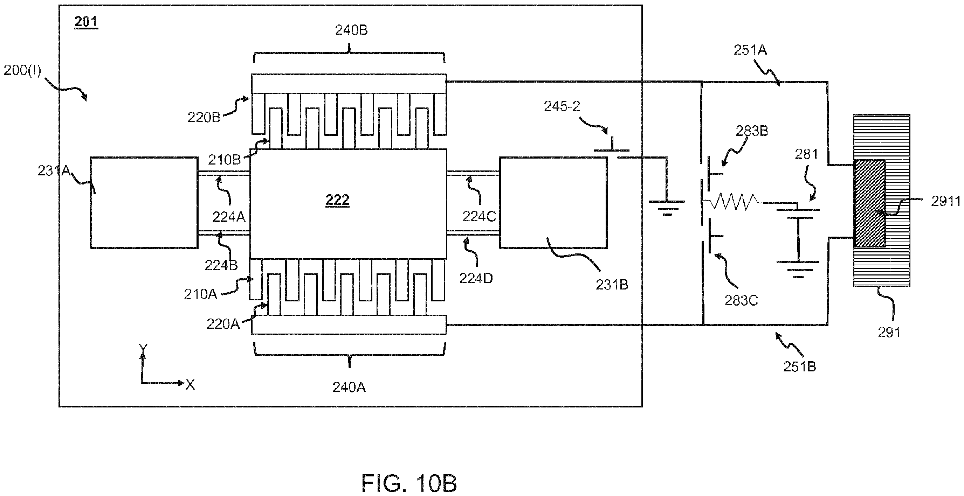

In **FIG. 10B** the first electrode **210** of DEVICE **200(I)** is charged by voltage source **281**, through an isolating switch **245-2**. During charging phase, switches **245-2**, **283A** and **283B** are turned ON, voltage source **281** is on and the charge between electrodes **210** and **220** is set. During working mode switches **245-2**, **283A** and **283B**, are turned OFF such that current generated in **220A** and **220B** flow into electric circuit **291**. Switch **245-2** may be MEMS switch that is fabricated as part of the DEVICE.

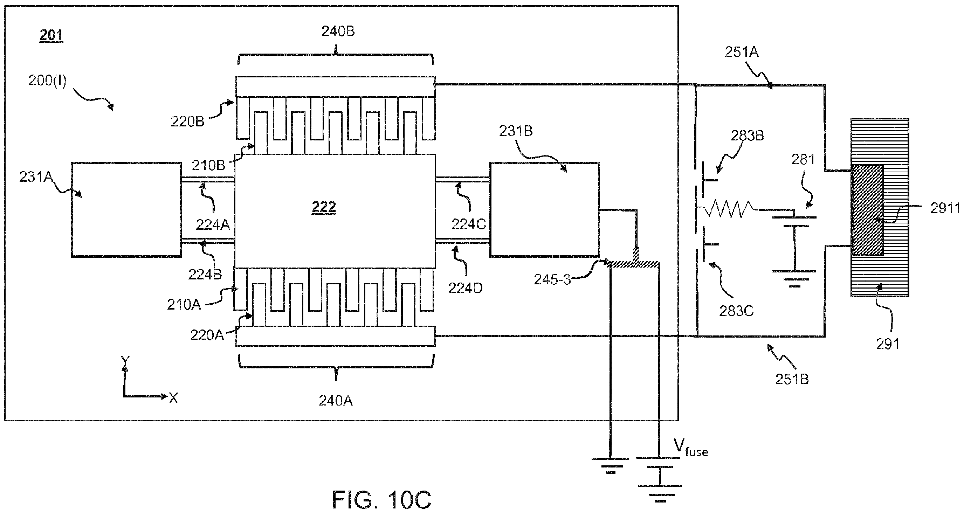

In **FIG. 10C** the first electrode **210** of DEVICE 200(I), is charged by voltage source through fuse **245-3**. During charging phase, switches **283A** and **283B** are ON, voltage source **281** is on and the charge between electrodes **210** and **220** is set. Once charge level is set $V_{fuse}$ is turned on and burns the electric path in fuse **245-3** and electrically disconnects electrode **210** such that electrode **210** is electrically isolated. During working mode switches **283A** and **283B**, are turned OFF such that current generated in **220A** and **220B** flow into electric circuit **291**. Fuse **245-3** maybe fabricated as part of the DEVICE. It is noted that in the embodiment of **FIG. 10C**, the charge in first electrode may be set only once.

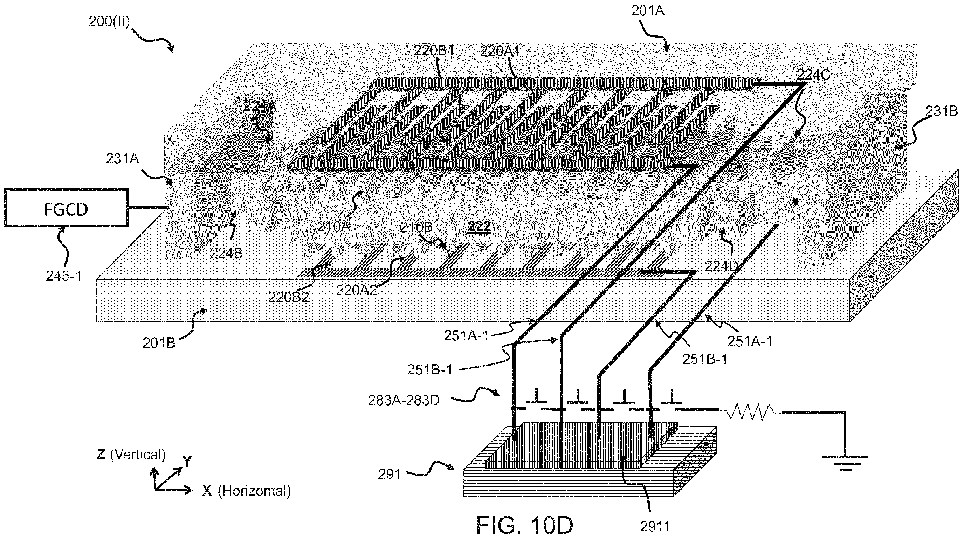

Additional reference is made to **FIGs. 10D-10F** that schematically illustrates a DEVICE **200(III)** shown in **FIG. 6D**. In **FIG. 10D** the first electrode is connected to the floating gate of a FGCD **245-1**. During charging cycle switches **283A-283D** are ON such that electrodes **220B1**, **220A1** on the upper layer **201A** as well as electrodes **220B1**, **220B2** on lower layer **201B** are connected to the ground. Once FGCD **245-1** is charged, the charge charges the capacitor formed between electrode **210A**, and electrodes **220B1** and **220A1**, as well as between electrode **210B** and electrodes **220B1** and **220B2**. During working mode, switches **283A-283D** are switched OFF and current generated in electrodes **220A1**, **220A2**, **220B1**, **220B2**, flow into electric circuit **291**.

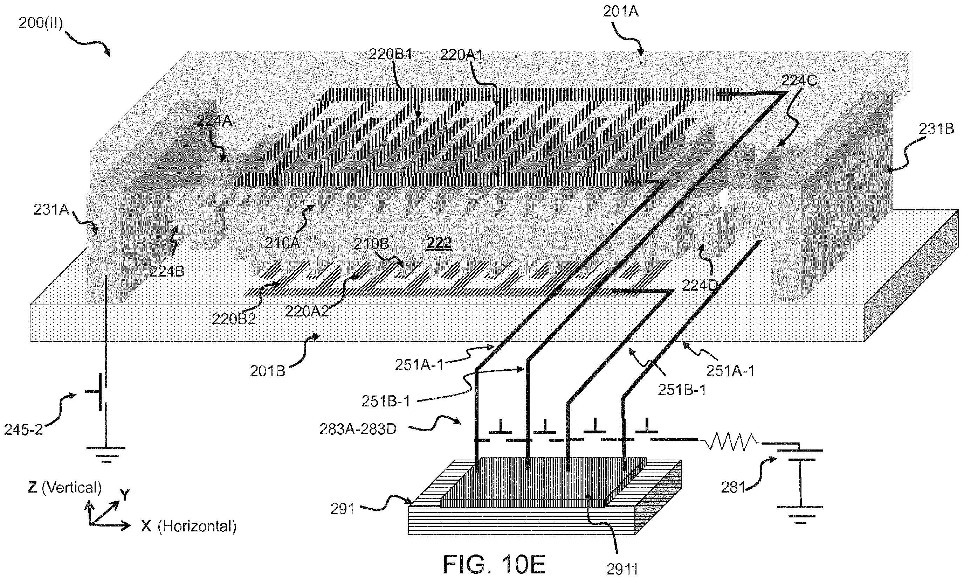

In **FIG. 10E** the first electrode of DEVICE **200(III)**, is connected to a voltage source **281**. During charging cycle the voltage of the voltage source is set to a required level and switches **245-2**, **283A-283D** turned are ON such that electrodes 210A and 210B are connected to the ground and electrodes **220B1**, **220A1** on the upper layer **201A** as well as electrodes **220B1**, **220B2** on lower layer **201B** are connected to the voltage source **281**. Once the charge between electrodes **220B1**, **220A1** and electrodes **210A** and between electrodes **220B1**, **220B2** and electrodes **210B** is set, switches **245-2**, **283A-283D** are turned OFF. During working mode, switches **245-2**, **283A-283D** are OFF and current generated in electrodes **220A1**, **220A2**, **220B1**, **220B2**, flow into electric circuit **291**.

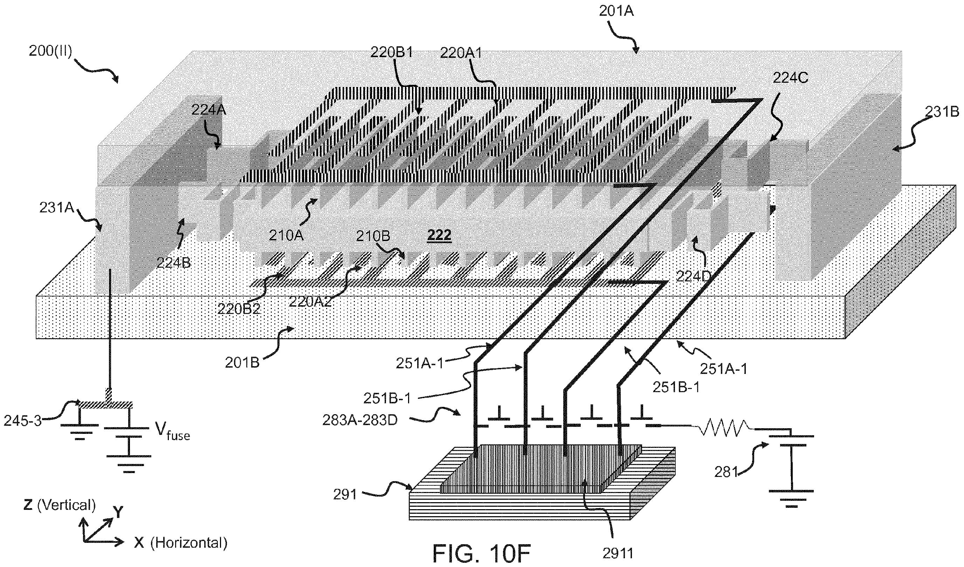

In **FIG. 10F** the first electrode **210** of DEVICE **200(III)**, is charged by voltage source through fuse **245-3**. During charging phase, switches **283A-283D** are ON, voltage source **281** is on and the charge between electrodes **220B1**, **220A1** and electrodes **210A** and between electrodes **220B1**, **220B2** and electrodes **210B** is set. Once charge level is set $V_{fuse}$ is turned on and burns the electric path in fuse **245-3** and electrically disconnects electrodes **210A** and **210B** such that electrodes **210A** and **210B** are electrically isolated. During working mode switches **283A-283D**, are turned OFF such that current generated in **220A1**, **220A2**, **220B1**, **220B2** flow into electric circuit **291**. Fuse **245-3** maybe fabricated as part of the DEVICE. It is noted that in the embodiment of **FIG. 10F**, the charge in first electrode may be set only once.

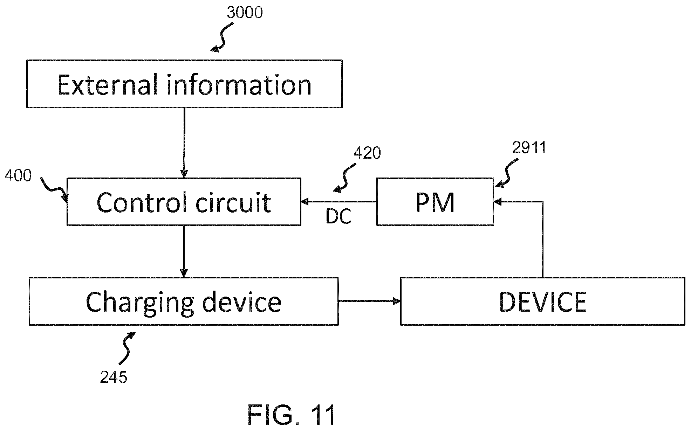

Electric circuit **291** in **FIGS 10A-10E** may be used to sense the movement of inertia mounded element **222**, by measuring the current flowing in electrodes **220A** and **220B** (**220A1**, **220B1**, **220A2**, **220B2**). Electric circuit **291** may also include power management circuit for manipulating the current flowing in electrodes **220A** and **220B** (**220A1**, **220B1**, **220A2**, **220B2**). Such manipulation may include for example amplification. Electric circuit **291** may also include power management **410** and control circuit **400** shown in **FIG. 11**, for managing the charging level of the DEVICE.

Electric circuit **291** in **FIGS 10A-10E** may be used to harvest the electric power flowing in electrodes **220A** and **220B** (**220A1**, **220B1**, **220A2**, **220B2**). The electric circuit **291** may also include power management circuit that for example may include rectifying, up or down conversion. Electric circuit **291** may also include power management **410** and control circuit **400** shown in **FIG. 11**, for managing the charging of an energy storage device such as battery or super capacitor. Electric circuit **291** may also include an electric circuit for managing an energy storage device such as battery or super capacitor that are feed by the DEVICE.

Reference is now made to **FIG. 11**, which shows a block diagram for controlling the charge level of the first electrodes in the embodiment described in this invention. The control circuit may receive inputs from the energy harvester and from the surroundings. The input from the energy harvester may be, for example, the displacement amplitude of the inertia element (seismic mass), or/and the power output from the energy harvester. The input from the surrounding may be for example, the vibration amplitude of energy harvester, or/and the vibration frequency. The control circuit may include a procedure for finding the optimal charging level of the first electrode. The control circuit may use a controller or a special designed ASIC chip.

According to some embodiments, the selectively chargeable electrodes may be made of P-type or N-type semiconductor material. As well known, the majority mobile charge carriers in N-type semiconductors are electrons and in P-type semiconductors are holes. To keep the semiconductor material electrically neutral, the electrons and holes are balanced by (respectively) positive and negative ions. If P-type semiconductor material is employed, electrons that are tunneled to the electrodes may recombine with the holes thus leaving the material charged with negatively charged ions. As a consequence, charge is less likely to move and eventually leak out of the isolated electrode either through the tunnel oxide or through the outer surface of the charged electrode.

In some embodiments and as outlined herein below in more detail, a charging arrangement may in some embodiments, act as a chemical sensor. For example, a negatively charged first electrode **210** may attract positively charged ions and/or molecules.

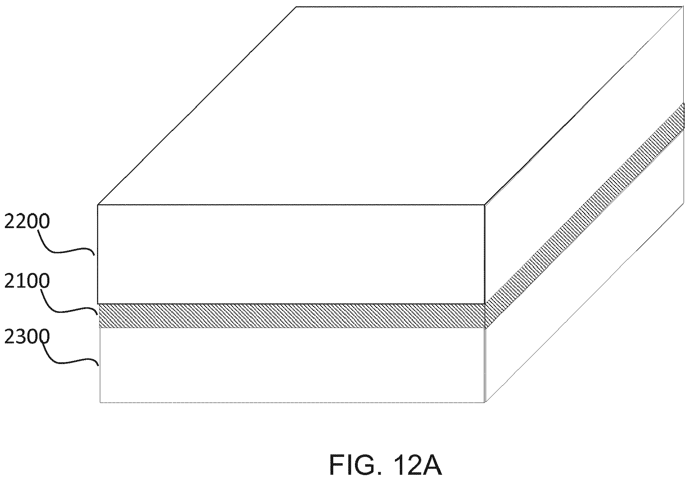

Reference is made to **FIG. 12A**. A method for manufacturing a charging arrangement may include providing a SOI wafer **2000** comprising a Between Oxide Layer (BOX) **2100** interposed between an upper silicon layer called the device layer **2200** and lower Silicon carrier wafer **2300**.

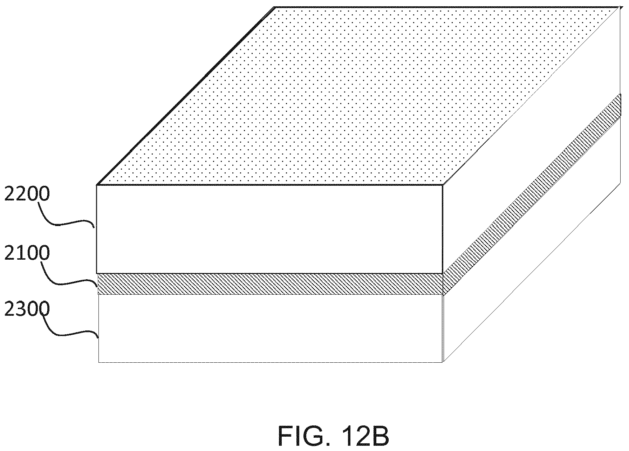

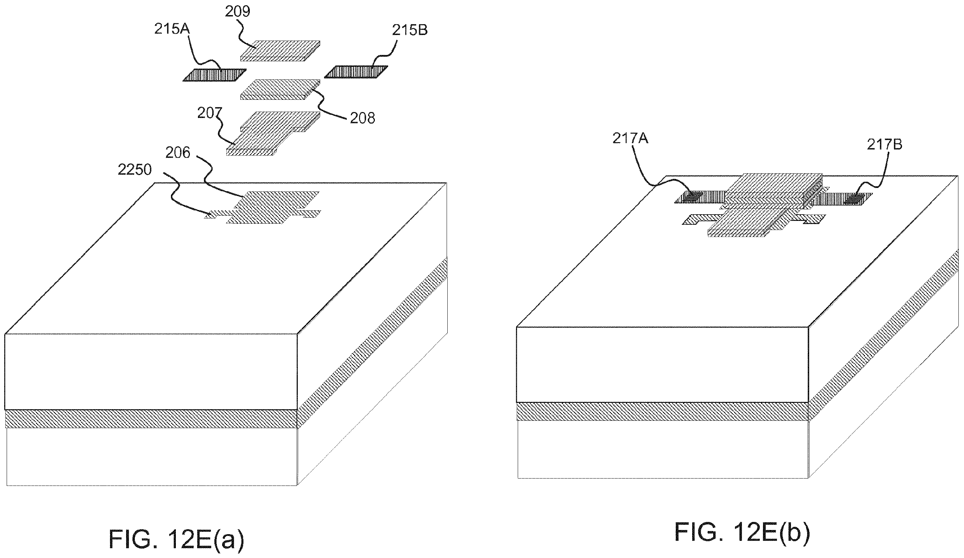

As shown schematically in **FIG. 12B**, the method may then include providing, e.g., a $Si_3N$ coating **2210** for preventing oxidation underneath it, as in **FIG. 12E**.

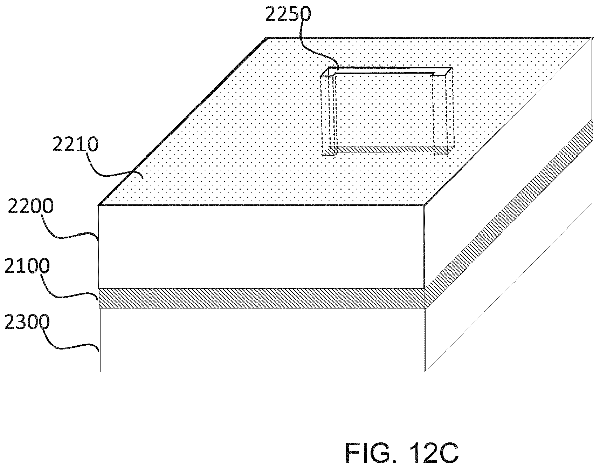

As shown schematically in **FIG. 12C**, the method may further include forming a U-shaped trench **2250** extending in wafer **2000** all across device layer **2200** down to the upper side of the oxide layer **2100**, by employing for example photolithography for pattern transfer, which may be followed by, e.g., Deep Reactive Ion Etching (DRIE) of the device layer down to the oxide layer **2100**.

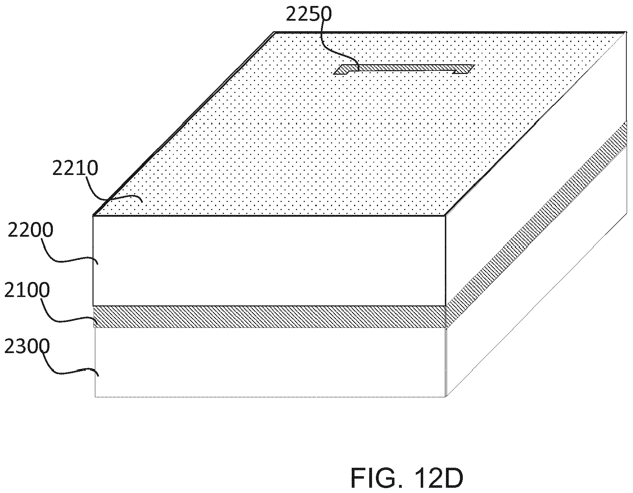

As shown schematically in **FIG. 12D**, the method may include performing thermal oxidation of the wafer such that the inner surface of U-shaped trench **2250** is filled with oxide. It is noted that other filling materials may be used.

As shown schematically in **FIG. 12E**, the method may further include employing a manufacturing process for obtaining a FGCD that is integrated with first electrode **210**. **FIG. 12E** shows in (a) a breakdown of the process. The integrated FGCD process may include patterning the Si3N4 layer in **FIG. 12E** to expose Silicon and an oxidation step that oxidizes the exposed Silicon to form the tunnel oxide **206** such that oxidation extends beyond the insulating barrier **2250**. Next the floating gate **207** is deposited and patterned such that it extends beyond the tunnel oxide **206** and makes an ohmic contact with the silicon beyond the tunnel oxide.

The use of insulating barrier **2250**, and the specific patterning the tunnel oxide and the floating gate are unique to the proposed process and are not common in state of the art FGCD technology. Source **215A** and Drain **215B** steps may follow by doping the areas on the two sides of the floating gate. An insulating layer **208** and a charging gate **209** are deposited and patterned to complete the FGCD step.

The method may include deposition and patterning of pads **217A** and **217B** as shown in **FIG. 12E** (b). The pad metallization comes last in the FGCD process.

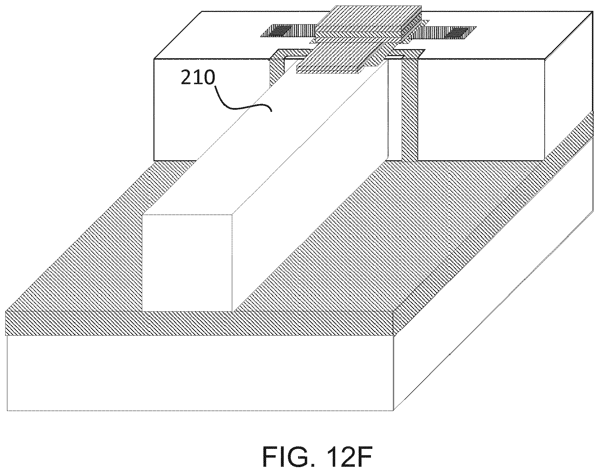

As shown schematically in **FIG. 12F**, the method may include employing photolithography, image transfer and DRIE down to the BOX such to obtain first electrode **210**.

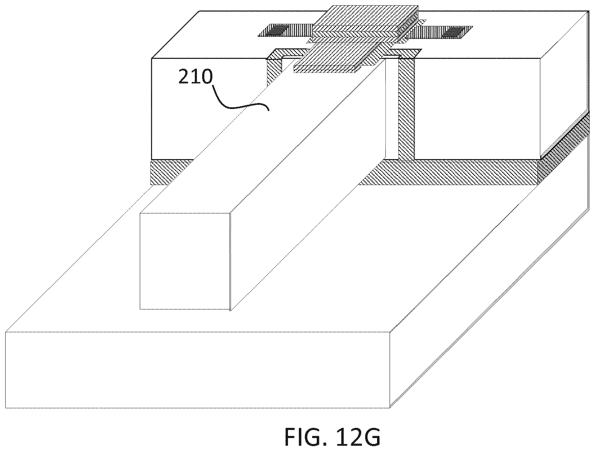

As shown schematically in **FIG. 12G**, the method may then include removal of the BOX.

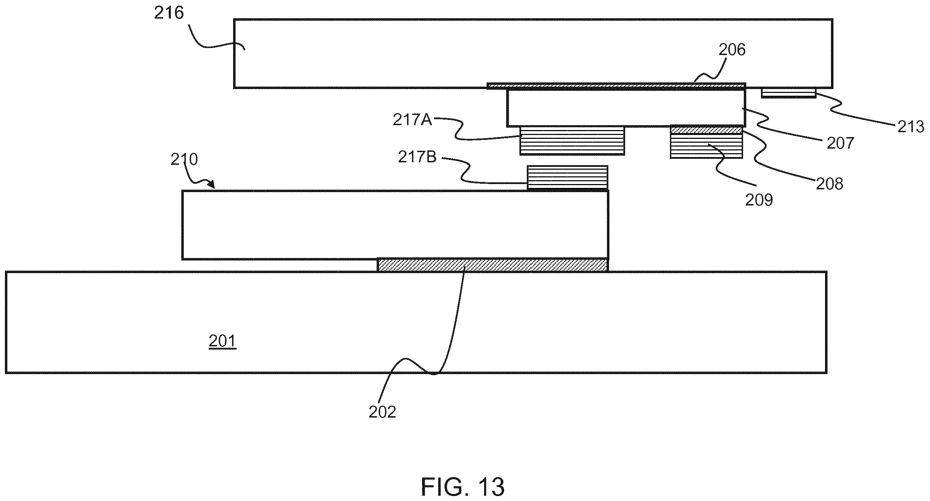

Reference is now made to **FIG. 13**, which describes another example of a fabrication process of the DEVICE.

**FIG. 13** is a side view showing one first fixed electrode **210** fabricated in one wafer such as discussed in different embodiments. One floating gate charging device is fabricated on a second wafer **216.** When the two wafers are bonded to each other, a contact such as eutectic contact, is formed between pads **217A** and **217B**, forming an electrical contact between the floating gate **207** and element **210**.

Other processes may be used including, for example, a process that includes an etch from the back side of substrate **201**, in selective places, all the way to oxide **202**, followed by an etch of this oxide to release suspended elements **220**. It is also noted that instead of using SOI wafers, Silicon on Glass (SOG) wafers may be used.

From the above, is it understood that the present invention refers to a device **200** for converting mechanical energy to electrical energy, comprising a mechanical device **2224** comprising a seismic mass **222** flexibly connected to a base **231** by at least one spring **224**, a mechanoelectric transducer **250** associated with mechanical device for converting the mechanical energy to the electric energy, such that the mechanoelectric transducer is deigned to adjust its mechanoelectrical property to a desired level. The transducer is connected to an electric circuit **291** such that when the seismic mass moves relative to the base an electric current is generated in the electric circuit.

The device for converting mechanical energy to electrical energy as stated above wherein the mechanoelectric transducer comprises a first electrode **210** mounted on seismic mass and a second electrode **220** mounted on a support **201A**, **201B**, **240A**, **240B**; wherein first electrode is designed to be electrically charged by a charging device **245-1**, **281**; wherein the charging device is connected to the first electrode through an electric disconnecting mechanism **245-2**, **285**, **206**; wherein the charging device is electrically connected to the first electrode only while charging; and wherein the first electrode is at close proximity to the second electrode.

The device for converting mechanical energy to electrical energy as stated above wherein the electrical disconnecting mechanism is a floating gate **245-1**, or an electrical switch **245-2** or a fuse **245-3**.

The device for converting mechanical energy to electrical energy as stated above, wherein the spring is a bending spring **2241** and wherein the mechanoelectric transducer comprises a plurality of piezoelectric transducers **230** fixed to bending spring; wherein one or more of the piezoelectric transducers are designed to be electrically conneted to or disconneted from the electric circuit such that the MEC of the transucer may be modulated.

The device for converting mechanical energy to electrical energy as stated above, wherein the mechanoelectric transducer comprising a magnet **300** fixed to the seismic mass and an inductor **310** at close proximity to the magnet; wherein the inductor has two terminals **252A**, **252B** that are connected to the electric circuit; and wherin a connection **253** of one of the terminals **252B** to the inductor is designed to slide along part **254** of the inductor scuh that the MEC of the transducer may be moduleted.

The device for converting mechanical energy to electrical energy as stated above, that further includes a power management circuit **2911** for converting the electric current to DC power so that the device for converting mechanical energy to electrical energy can be used for energy harvesting.

The device for converting mechanical energy to electrical energy as stated above, that further includes a secondary electric circuit **400** for adjusting the desired level of the MEC such that the electric current can be adjusted. This device may further include a power management circuit **2911** that transform the electric current to a DC power source **420** for powering the secondary electric circuit.

The device for converting mechanical energy to electrical energy as stated above, wherein a value of the electric current is used to represent a movement of the device or to be used as an inertial sensor.

It should be understood that where the claims or specification refer to "a" or "an" element, such reference is not to be construed as there being only one of that element.

In the description and claims of the present application, each of the verbs, "comprise" "include" and "have", and conjugates thereof, are used to indicate that the object or objects of the verb are not necessarily a complete listing of components, elements or parts of the subject or subjects of the verb.

Unless otherwise stated, the use of the expression "and/or" between the last two elements of a list of options for selection indicates that a selection of one or more of the listed options is appropriate and may be made.

It is noted that the term "perspective view" as used herein may also refer to an "isometric view".

It is appreciated that certain features of the invention, which are, for clarity, described in the context of separate embodiments or example, may also be provided in combination in a single embodiment. Conversely, various features of the invention, which are, for brevity, described in the context of a single embodiment, may also be provided separately or in any suitable sub-combination or as suitable in any other described embodiment of the invention. Certain features described in the context of various embodiments are not to be considered essential features of those embodiments, unless the embodiment is inoperative without those elements.

All references mentioned in this specification are herein incorporated in their entirety by reference into the specification, to the same extent as if each individual patent was specifically and individually indicated to be incorporated herein by reference. In addition, citation or identification of any reference in this application shall not be construed as an admission that such reference is available as prior art to the present application.

It is further noted that the microfabrication processes described above are just examples of many possible process flows.

In the discussion, unless otherwise stated, adjectives such as "substantially" and "about" that modify a condition or relationship characteristic of a feature or features of an embodiment of the invention, are to be understood to mean that the condition or characteristic is defined to within tolerances that are acceptable for operation of the embodiment for an application for which it is intended.

Positional terms such as "upper", "lower" "right", "left", "bottom", "below", "lowered", "low", "top", "above", "elevated", "high", "vertical" and "horizontal" as well as grammatical variations thereof as may be used herein do not necessarily indicate that, for example, a "bottom" component is below a "top" component, or that a component that is "below" is indeed "below" another component or that a component that is "above" is indeed "above" another component as such directions, components or both may be flipped, rotated, moved in space, placed in a diagonal orientation or position, placed horizontally or vertically, or similarly modified. Accordingly, it will be appreciated that the terms "bottom", "below", "top" and "above" may be used herein for exemplary purposes only, to illustrate the relative positioning or placement of certain components, to indicate a first and a second component or to do both. Further, directional terms such as "upwards" and "downwards" as used herein may indicate relative movement.

"Coupled with" means "coupled with directly or indirectly".

It is important to note that the method is not limited to those diagrams or to the corresponding descriptions. For example, the method may include additional or even fewer processes or operations in comparison to what is described herein. In addition, embodiments of the method are not necessarily limited to the chronological order as illustrated and described herein.

**Claims**

1. A device for converting mechanical energy to electrical energy, comprising:

   a mechanical device comprising a seismic mass flexibly connected to a base by at least one spring,
   a mechanoelectric transducer associated with said mechanical device for converting the mechanical energy to the electric energy, said mechanoelectric transducer is designed to adjust its mechanoelectrical property to a desired level,
   an electric circuit that is connected to the mechanoelectric transducer, such that when the seismic mass moves relative to the base an electric current is generated in the electric circuit.

2. The device for converting mechanical energy to electrical energy of claim 1 wherein said mechanoelectric transducer comprises a first electrode mounted on said seismic mass and a second electrode mounted on a support; wherein said first electrode is designed to be electrically charged by a charging device; wherein said charging device is connected to said first electrode through an electrical disconnecting mechanism; wherein said charging device is electrically connected to said first electrode only while charging; and wherein said first electrode is at close proximity to said second electrode.

3. The device for converting mechanical energy to electrical energy of claim 2, wherein said electrical disconnecting mechanism is a floating gate, an electrical switch or a fuse.

4. The device for converting mechanical energy to electrical energy of of any of the preceding claims, wherein said spring is a bending spring and wherein said mechanoelectric transducer comprises a plurality of piezoelectric transducers fixed to said bending spring; wherein one or more of said piezoelectric transducers are designed to be electrically conneted to or disconneted from said electric circuit.

5. The device for converting mechanical energy to electrical energy of any of the preceding claims, wherein said mechanoelectric transducer comprising a magnet fixed to said seismic mass and an inductor at close proximity to the magnet; wherein the inductor has two terminals that are connected to said electric circuit; and wherin a connection of one of said terminals to the inductor is designed to slide along at least part of said inductor.

6. The device for converting mechanical energy to electrical energy according to any of the preceding claims that further includes a power management circuit for converting said electric current to DC power so that the device for converting mechanical energy to electrical energy can be used for energy harvesting.

7. The device for converting mechanical energy to electrical energy according to any of the preceding claims that further includes a secondary electric circuit for adjusting said desired level of said mechanoelectrical property such that said electric current can be adjusted.

8. The device for converting mechanical energy to electrical energy according to claim 7 that further includes a power management circuit that transform said electric current to a DC power source for powering said secondary electric circuit.

9. The device for converting mechanical energy to electrical energy according to any of the preceding claims, wherein a value of said electric current is used to represent a movement of said device.

FIG. 1B
(Prior Art)

FIG. 1A
(Prior Art)

FIG. 2B
(Prior Art)

FIG. 2A
(Prior Art)

FIG. 2D
(Prior Art)

FIG. 2

FIG. 2C
(Prior Art)

FIG. 3A

FIG. 3B

EP 3 683 951 A1

FIG. 4

FIG. 5A

FIG. 5B

FIG. 6A

FIG. 6B

FIG. 6C

FIG. 6D

EP 3 683 951 A1

FIG. 7A

FIG. 7B

EP 3 683 951 A1

FIG. 7C

FIG. 8A

FIG. 8C

FIG. 8B

FIG. 9A

EP 3 683 951 A1

FIG. 9B

FIG. 10A

FIG. 10B

FIG. 10C

FIG. 10D

EP 3 683 951 A1

FIG. 10E

FIG. 10F

EP 3 683 951 A1

3000

External information

400

Control circuit

420

DC

2911

PM

Charging device

DEVICE

245

FIG. 11

FIG. 12A

FIG. 12B

FIG. 12C

EP 3 683 951 A1

FIG. 12D

FIG. 12E(b)

FIG. 12E(a)

FIG. 12F

210

FIG. 12G

FIG. 13

EP 3 683 951 A1

Europäisches
Patentamt

European
Patent Office

Office européen
des brevets

# EUROPEAN SEARCH REPORT

Application Number

EP 19 19 5972

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/007468 A1 (WHITE RICHARD M [US] ET AL) 12 January 2012 (2012-01-12) | 1,4,6-9 | INV. H02N2/18 |
| Y | * paragraphs [0033] - [0038]; figures 7,8,10 * | 5 | |
| A | | 2,3 | |
| | ----- | | |
| Y | US 2009/261689 A1 (FANG HUA BIN [CN]) 22 October 2009 (2009-10-22) * paragraphs [0022] - [0042]; figures 2-4 * | 5 | |
| | ----- | | |
| X | GEORGI TODOROV ET AL: "Tuning techniques for kinetic MEMS energy harvesters", TELECOMMUNICATIONS ENERGY CONFERENCE (INTELEC), 2011 IEEE 33RD INTERNATIONAL, IEEE, 9 October 2011 (2011-10-09), pages 1-6, XP032071367, DOI: 10.1109/INTLEC.2011.6099874 ISBN: 978-1-4577-1249-4 * Section II; figures 2,3 * | 1-3 | |
| | ----- | | |

**TECHNICAL FIELDS SEARCHED (IPC)**

H02N

The present search report has been drawn up for all claims

| Place of search | Date of completion of the search | Examiner |
|---|---|---|
| Munich | 26 March 2020 | Steiner, Markus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 19 5972

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2020

| Patent document cited in search report | Publication date | Patent family member(s) | Publication date |
|---|---|---|---|
| US 2012007468 A1 | 12-01-2012 | US 2012007468 A1<br>WO 2012006573 A1 | 12-01-2012<br>12-01-2012 |
| US 2009261689 A1 | 22-10-2009 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8796902 B, TATSUAKIRA
- US 20170373611 A, Cottone
- US 6597048 B, Ken
- JP 2008200758 B, Sato
- US 6597048 B1
- JP 2008200758 A

### Non-patent literature cited in the description

- Efficiency Evaluation of Micro Seismic Electret Power Generator. **T. TSUTSUMINO ; Y. SUZUKI ; N. KASAGI ; K. KASHIWAGI ; Y. MORIZAWA.** Proceedings of the 23rd Sensor Symposium 2006. Takamatsu, 521-524
- **MA WEI ; ZHU RUIQING ; RUFER LIBOR ; ZOHAR YITSHAK ; WONG MAN.** An integrated floating-electrode electric microgenerator. *Journal of microelectromechanical systems,* February 2007, vol. 16 (1), 29-37